# EUROPEAN PATENT APPLICATION

(11) **EP 3 501 856 A1**
(43) Date of publication of application: **26.06.2019**
(21) Application number: 18211760.6
(22) Date of filing: 11.12.2018
(51) Int. Cl.: B60C 15/06

(54) **PNEUMATIC TIRE WITH A ROBUST PLY ENDING STRUCTURE**

(30) Priority: 15.12.2017 US 201762599326 P; 29.08.2018 US 201816116110
(71) Applicant: The Goodyear Tire & Rubber Company, Akron, OH 44316 (US)
(72) Inventor: KRIER, Jean-Julien Edouard Ghislain, 6600 Bastogne (BE); MAUS, Peter Cornelius, 4760 Bullingen (BE); ZHANG, Hao, 9047 Ettelbruck (LU); SONG, Xiaofeng, Dalian (CN)
(74) Representative: Kutsch, Bernd

(57) **Abstract**

A pneumatic radial tire is disclosed. The tire (50, 100) comprises a pair of opposing bead areas (52), wherein each bead area (52) includes a bead core (54) and a bead apex (64); at least one carcass reinforcing ply (58), the reinforcing ply (58) including a turn up portion (62) at each bead core (54), each turn up portion including a radially outward end (66); and a pair of chippers (72, 82, 102, 112) disposed at one of the turn up portions (62) or at each turn up portion (62), the pair of chippers including a first chipper (82, 102) and a second chipper (72, 112). The first chipper (82, 102) is disposed axially inwardly of the second chipper (72, 112) and includes a radially outward end (86, 106) being disposed radially outwardly of the radially outward end (66) of the turn up portion (62). The second chipper (72, 112) includes a radially outward end (76, 116) being disposed radially outwardly of the radially outward end (86, 106) of the first chipper (82, 102).

## Description

### Field of the Invention

The invention relates to pneumatic tires. More particularly, the invention relates to the structure of radial ply tires. Specifically, the invention is directed to a pneumatic radial tire that includes a ply ending structure which improves the durability of the bead area of the tire.

### Background of the Invention

In the manufacture of a pneumatic tire, the tire is typically built on the drum of a tire-building machine, which is known in the art as a tire building drum. Numerous tire components are wrapped about and/or applied to the drum in sequence, forming a cylindrical-shaped tire carcass. The tire carcass is then expanded into a toroidal shape for receipt of the remaining components of the tire, such as a belt package and a rubber tread. The completed toroidally-shaped unvulcanized tire carcass, which is known in the art at that stage as a green tire, is then inserted into a mold or press for forming of the tread pattern and curing or vulcanization.

One of the components of the tire is the bead area. The bead area includes a core, which is an annular tensile member wrapped by ply cords and shaped to fit the wheel rim. Typically, a bead core is integrated into each side of the tire to provide a secure fit of the tire on each side of the wheel rim.

Durability of the bead area of the tire is an item that is sought to be improved in the tire industry. For example, in applications such as short distance delivery in city or urban environments, the frequent starting and stopping of a vehicle such as a truck may create high load conditions on the bead area of the tire.

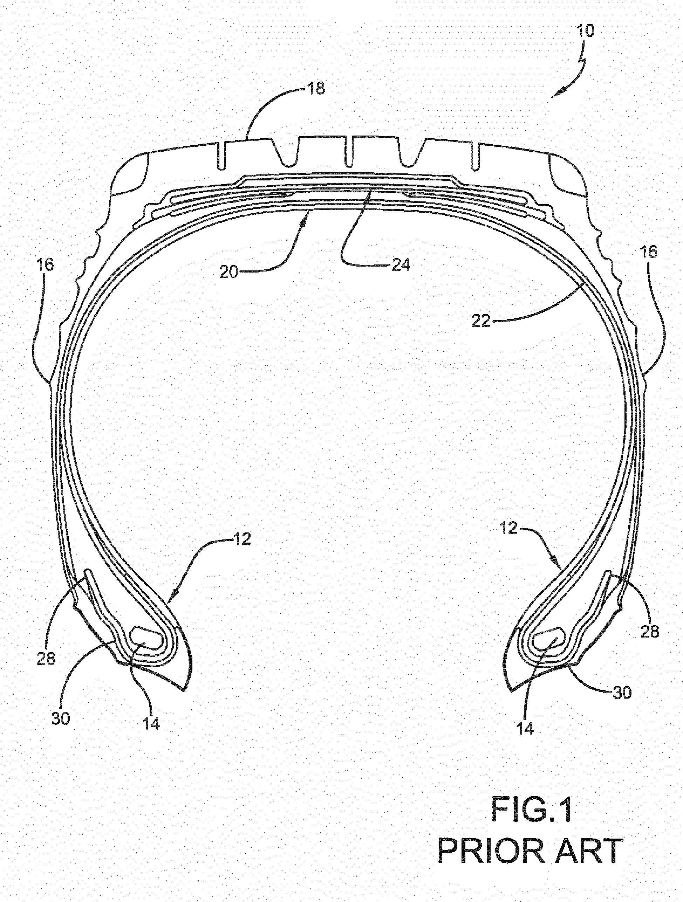

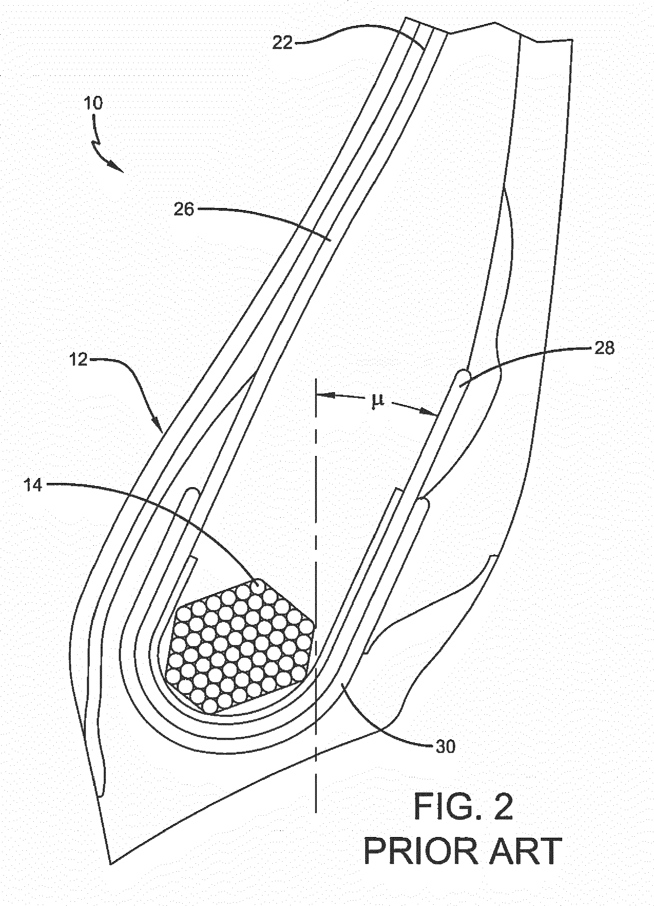

A tire of the prior art is shown in Figures 1 and 2. The tire 10 includes a pair of bead areas 12 and a respective bead core 14 embedded in each bead area. A respective sidewall 16 extends radially outward from each bead area 12 to a groundcontacting tread 18. The tire 10 is reinforced by a carcass 20 that toroidally extends from one of the bead areas 12 to the other one of the bead areas. The carcass 20 includes at least one ply 22 that winds around each bead core 14. A belt reinforcement package 24 is disposed between the carcass 20 and the tread 18. What is conventionally considered a main portion 26 of the carcass reinforcing ply 22 extends radially inward toward the tire rim (not shown) and is turned about each bead core 14 to form a carcass ply turn up 28. The carcass ply turn up 28 extends at a single angle µ relative to a radial line tangent to the axially outermost point of the bead core 14 and parallel to the equatorial plane of the tire 10. A chafer 30 is disposed about the radially inward surface of the carcass ply turn up 28 to resist chafing of the tire 10 by the rim.

Due to the configuration and nature of the radial carcass 20, when the tire 10 is expanded, the main portion 26 of the carcass ply 22 is put under tension, pulling the carcass main portion radially outward and the carcass ply turn up 28 radially inward. After inflation and during operation of the tire 10, when the tire is under deflection, the carcass ply 22 is subject to bending forces and the carcass main portion 26 moves radially inward while the carcass turn up 28 moves radially and axially outward. Due to the adhesion relationship between the rubber and the reinforcing cords of the ply 22, the rubber surrounding the carcass main portion 26 and the carcass turn up 28 also is forced to move during both tension and deflection, resulting in the rubber being stressed. The movement of the carcass ply 22 and the surrounding rubber may thus result in cracking of the rubber in each tire bead area 12, thereby potentially decreasing durability of the tire 10.

Therefore, it is desirable to provide a tire that includes a structure that improves the durability of the bead area.

### Summary of the Invention

The invention relates to a tire in accordance with claim 1.

Dependent claims refer to preferred embodiments of the invention.

According to a preferred aspect of an exemplary embodiment of the invention, a pneumatic radial tire includes a pair of opposing bead areas, in which each bead area includes a bead core and a bead apex. At least one carcass reinforcing ply includes a turn up at each bead core, and each turn up includes a radially outward end. A pair of chippers is disposed at each turn up, in which the pair of chippers includes a first chipper and a second chipper. The first chipper is disposed axially inwardly of the second chipper and includes a radially outward end that is disposed radially outwardly of the radially outward end of the turn up. The second chipper includes a radially outward end that is disposed radially outwardly of the radially outward end of the first chipper, in which forces due to deflection of the tire are absorbed by the pair of chippers to reduce stresses along each turn up.

### Definitions

"Axial" and "axially" mean lines or directions that are parallel to the axis of rotation of the tire.
"Axially inward" and "axially inwardly" refer to an axial direction that is toward the equatorial plane of the tire.
"Axially outward" and "axially outwardly" refer to an axial direction that is away from the equatorial plane of the tire.
"Bead" means that part of the tire comprising an annular tensile member wrapped by ply cords and shaped, with or without other reinforcement elements such as flippers, chippers, apexes, toe guards and chafers, to fit the design rim.
"Carcass" means the tire structure apart from the belt structure, tread, undertread, and sidewall rubber over the plies, but including the beads.
"Chafer" means a layer of reinforcing material around the bead in the rim flange area to prevent chafing of the tire by the rim.
"Circumferential" means lines or directions extending along the perimeter of the surface of the annular tread perpendicular to the axial direction.
"Equatorial plane (EP)" means the plane perpendicular to the tire's axis of rotation and passing through the center of its tread.
"Inboard" and "inboardly" refer to an axial direction that is toward the equatorial plane of the tire.
"Outboard" and "outboardly" refer to an axial direction that is away from the equatorial plane of the tire.
"Radial" and "radially" mean lines or directions that are perpendicular to the axis of rotation of the tire.
"Radially inward" and "radially inwardly" refer to a radial direction that is toward the central axis of rotation of the tire.
"Radially outward" and "radially outwardly" refer to a radial direction that is away from the central axis of rotation of the tire.
"Radial-ply tire" means a belted or circumferentially-restricted pneumatic tire in which the ply cords which extend from bead to bead are laid at cord angles between 65 to 90 degrees with respect to the equatorial plane of the tire.

### Brief Description of the Drawings

The invention will be described by way of example and with reference to the accompanying drawings, in which:
Figure 1 is a schematic cross-sectional view of an exemplary tire of the prior art;
Figure 2 is an enlarged fragmentary view of a bead area of the tire shown in Figure 1;
Figure 3 is an enlarged fragmentary view of a bead area of a first exemplary embodiment of the tire of the present invention; and
Figure 4 is an enlarged fragmentary view of a bead area of a second exemplary embodiment of the tire of the present invention.

Similar numerals refer to similar parts throughout the drawings.

### Detailed Description of Example Embodiments of the Invention

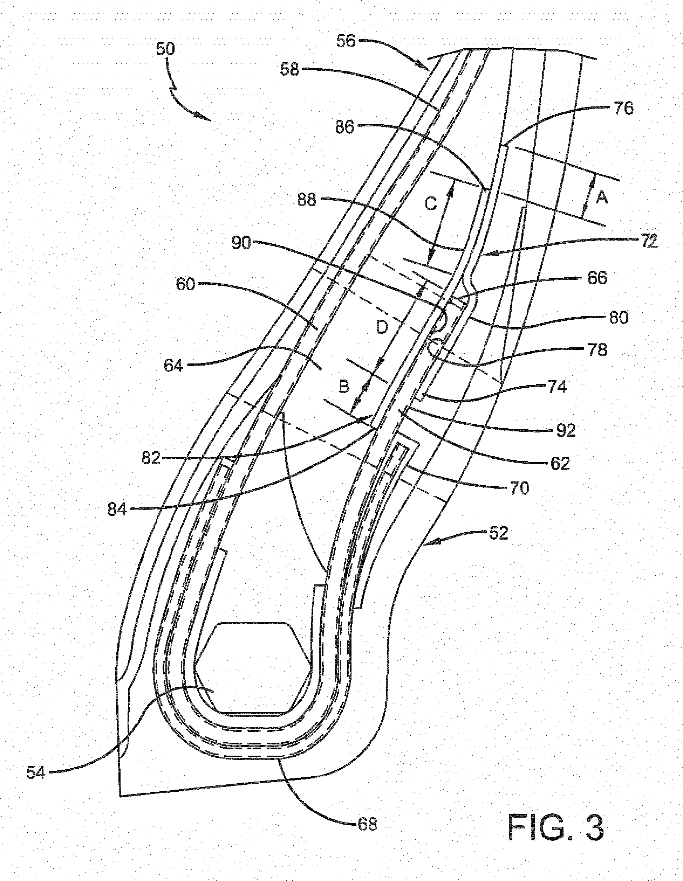

A first exemplary embodiment of a tire 50 of the present invention is shown in Figure 3. The general construction of the tire 50 is somewhat similar to that of prior art tire 10, with the principal differences to be described in detail below.

The tire 50 includes a pair of bead areas 52 (only one shown) and a respective bead core 54 embedded in each bead area. A carcass 56 includes at least one ply 58 that preferably winds around each bead core 54. A main portion 60 of the carcass reinforcing ply 58 extends radially inward toward the tire rim (not shown) and is turned about each bead core 54 to form a carcass ply turn up 62. The carcass reinforcing ply 58 is also wrapped about a bead apex 64. In this manner, the carcass reinforcing ply 58 envelopes the bead core 54 and a lower portion of the bead apex 64 in each bead area 52. The carcass ply turn up 62 terminates at a radially outward end 66. Preferably, a chafer 68 is disposed about the radially inward surface of the carcass ply turn up 62 to resist chafing of the tire 50 by the rim, and may include an end cap 70.

Axially outward of the carcass ply turn up 62 is an axially outer chipper 72, which is a reinforced layer, as will be described in greater detail below. The axially outer chipper 72 includes a radially inward end 74, a radially outward end 76, an inboard surface 78 and an outboard surface 80. Axially inward of the carcass ply turn up 62 is an axially inner chipper 82, which is a reinforced layer, as will be described in greater detail below. The axially inner chipper 82 includes a radially inward end 84, a radially outward end 86, an inboard surface 88 and an outboard surface 90.

The inboard surface 78 of the outer chipper 72 adjacent its radially inward end 74 is bonded to an outboard surface 92 of the carcass ply turn up 62 near the turn up end 66. The outboard surface 90 of the inner chipper 82 adjacent its radially inward end 84 is bonded to an inboard surface 92 of the carcass ply turn up 62 near the turn up end 66. The outer chipper 72 and the inner chipper 82 extend radially outwardly past the end 66 of the carcass ply turn up 62. Once past the carcass ply turn up end 66, the inboard surface 78 of the outer chipper 72 is bonded to the outboard surface 90 of the inner chipper 82. In this manner, the outer chipper 72 and the inner chipper 82 form a sandwich-layer construction with the carcass ply turn up 62.

The outer chipper 72 and the inner chipper 82 preferably are of similar lengths. The radially inward end 74 of the outer chipper 72 is offset in a radially outward direction from the radially inward end 84 of the inner chipper 82 by a distance of preferably at least 5 millimeters (mm) or in a range of from 5 to 10 mm. As a result, the radially outward end 76 of the outer chipper 72 extends radially outwardly past the radial outward end 86 of the inner chipper 82 by a distance of at least 5 mm.

By way of example, the outer chipper 72 and the inner chipper 82 may each be 35 mm or from 30 mm to 40 mm long. In such a case, the radially outward end 76 of the outer chipper 72 extends radially outwardly past the radially outward end 86 of the inner chipper 82 by a distance indicated by A. Distance A is preferably at least 5 mm, or at least 15 percent of the length of the outer chipper 72 and the inner chipper 82. Preferably, distance A is 6 mm or 5 to 7 mm, or at least 17 percent of the length of the outer chipper 72 and the inner chipper 82.

The radially inward end 84 of the inner chipper 82 extends radially inwardly past the radially inward end 74 of the outer chipper 72 by a distance indicated by B. Preferably, distance B is at least 5 mm or in a range of from 5 to 10 mm, or at least 15 percent of the length of the outer chipper 72 and the inner chipper 82. Preferably, distance B is 6 mm or 5 to 7 mm, or at least 17 percent of the length of the outer chipper 72 and the inner chipper 82.

The inboard surface 78 of the outer chipper 72 is bonded to the outboard surface 90 of the inner chipper 82 for a distance indicated by C. Distance C is preferably 12 mm or 10 to 14 mm, or 34 percent of the length of the outer chipper 72 and the inner chipper 82.

The inboard surface 78 of the outer chipper 72 is bonded to the outboard surface 92 of the carcass ply turn up 62 for a distance indicated by D. Distance D is preferably 13 to 14 mm, 12 to 15 mm, or 35 to 40 percent of the length of the outer chipper 72 and the inner chipper 82.

The outboard surface 90 of the inner chipper 82 is bonded to the inboard surface 92 of the carcass ply turn up 62 for a distance indicated by D plus B. Distance D plus distance B is at least 18 mm to 20 mm, or in a range of from 18 to 25 mm, or 50 percent to 57 percent of the length of the outer chipper 72 and the inner chipper 82.

The outer chipper 72 is formed of or comprises an elastomer or polymer compound known to those skilled in the art. The inner chipper 82 is formed of or comprises the same elastomer or polymer compound as the outer chipper 72, or is formed of or comprises a different elastomer or polymer compound.

Both the outer chipper 72 and the inner chipper 82 are preferably reinforced cords, more preferably with substantially inextensible cords.

Preferably, the cords, are made of steel having a mesh or arrangement of parallel cords having of from 8 to 18 ends per 2.54 cm, and more having of from 12 to 16 ends per 2.54 cm.

The cord gauge or wire cord gauge of each chipper 72 and 82 is preferably in a range of from 0.6 mm to 1.5 mm.

Alternatively, the cords in each chipper 72 and 82 may be made of a polyamide monofilament cord of any cross-sectional shape, such as round, oval or star.

The cords of each chipper 72 and 82 preferably are oriented at an angle in a range of from 25 degrees to 85 degrees with respect to the radially oriented cords, preferably steel cords, that reinforce the carcass ply 58. More preferably, the cords of each chipper 72 and 82 are oriented in a range of from 25 to 45 degrees.

The outer chipper 72 and the inner chipper 82, when assembled as shown, preferably have generally equal, but oppositely oriented cord angles.

Having the cord angles biased oppositely at the locations where the chippers 72 and 82 are joined causes the stresses that would normally tend to initiate a crack at the end 66 the carcass ply turn up 62 to be absorbed first by the radially outward end 76 of the outer chipper 72. Such absorption causes shear stresses to progress radially inwardly to the area where the inner chipper 82 is joined to the outer chipper 72, which in turn causes the shear forces to be absorbed in both the outer and inner chippers above or radially outwardly of the carcass ply turn up 62. This absorption of forces lowers the shear forces absorbed by the carcass ply turn up 62, while also transferring stress to the inner chipper 82 without unduly loading the carcass ply turn up.

The tire 50 of the present invention provides a structure in which forces due to deflection are absorbed by the outer chipper 72, as its radially outward end 76 extends radially outwardly past the inner chipper 82 and the carcass ply turn up 62. Those forces are then absorbed by the outer chipper 72 and the inner chipper 82. Such absorption of forces by the outer chipper 72 and the inner chipper 82 lowers shear stresses along the carcass ply turn up 62. Lowering or reducing the stresses in the carcass ply turn up 62 enables the tire 50 to resist fatigue cracking in the bead area 52, thereby improving the durability of the bead area.

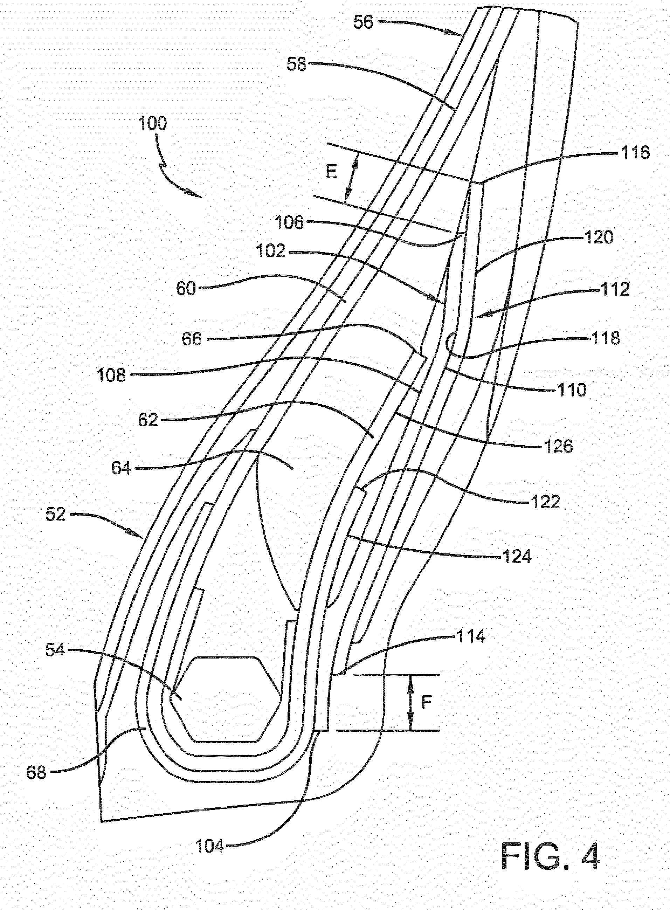

A second exemplary embodiment of a tire 100 of the present invention is shown in Figure 4. The general construction of the tire 100 is somewhat similar to that of the first embodiment of the tire 50 of the present invention, with the principal differences to be described in detail below. The second embodiment of the tire 100 finds particular application when cost and/or manufacturing considerations are a particular concern, as the second embodiment of the tire may be more economical to manufacture than the first embodiment of the tire 50.

As with the first embodiment of the tire 50, the second embodiment of the tire 100 includes a pair of bead areas 52 (only one shown) and a respective bead core 54 embedded in each bead area. A carcass 56 includes at least one ply 58 that preferably winds around each bead core 54. A main portion 60 of the carcass reinforcing ply 58 extends radially inward toward the tire rim (not shown) and is turned about each bead core 54 to form a carcass ply turn up 62. The carcass reinforcing ply 58 is also wrapped about a bead apex 64. In this manner, the carcass reinforcing ply 58 envelopes the bead core 54 and a lower portion of the bead apex 64 in each bead area 52. The carcass ply turn up 62 terminates at a radially outward end 66. A chafer 68 is disposed about the radially inward surface of the carcass ply turn up 62 to resist chafing of the tire 50 by the rim.

Axially outward of the carcass ply turn up 62 is a first axially outer chipper 102, which a reinforced layer, as will be described in greater detail below. The first outer chipper 102 includes a radially inward end 104, a radially outward end 106, an inboard surface 108 and an outboard surface 110. Axially outwardly of the first outer chipper 102 is a second axially outer chipper 112, which is a reinforced layer, as will be described in greater detail below. The second axially outer chipper 112 includes a radially inward end 114, a radially outward end 116, an inboard surface 118 and an outboard surface 120.

The inboard surface 78 of the first outer chipper 102 is bonded to the chafer 68 and the carcass ply turn up 66. More particularly, the chafer 68 includes an axially outer end 122 and an outboard surface 124, and the carcass ply turn up 62 includes an outboard surface 126 that extends radially outwardly past the outer end of the chafer. The inboard surface 78 of the first outer chipper 102 is bonded to the outboard surface 124 of the chafer 68 and to the outboard surface 126 of the carcass ply turn up 62. The radially inward end 104 of the first outer chipper 102 is disposed below or radially inwardly of the axially outer end 122 of the chafer 68, and extends radially outwardly past the end 66 of the carcass ply turn up 62. In this manner, the first outer chipper 102 covers the axially outer end 122 of the chafer 68 and the end 66 of the carcass ply turn up 62.

The inboard surface 118 of the second outer chipper 112 is bonded to the outboard surface 110 of the first outer chipper 102. The first outer chipper 102 and the second outer chipper 112 preferably are of similar lengths. The radially inward end 114 of the second outer chipper 112 is offset in a radially outward direction from the radially inward end 104 of the first outer chipper 102 by a distance of preferably at least 5 mm. As a result, the radially outward end 116 of the second outer chipper 112 extends radially outwardly past the radial outward end 106 of the first outer chipper 102 by a distance of at least 5mm or in a range of from 5 to 10 mm.

By way of example, the first outer chipper 102 and the second chipper 112 may each be 72 mm long or from 65 mm to 80 mm long. In such a case, the radially outward end 116 of the second outer chipper 112 extends radially outwardly past the radially outward end 106 of the first outer chipper 102 by a distance indicated by E.

Distance E is preferably at least 5 mm or in a range of from 5 to 10 mm, or at least 7 percent of the length of the first outer chipper 102 and the second outer chipper 112.

Preferably, distance A is 8 mm or from 7 to 9 mm, or at least 11 percent of the length of the first outer chipper 102 and the second outer chipper 112.

The radially inward end 104 of the first outer chipper 102 extends radially inwardly past the radially inward end 114 of the second outer chipper 112 by a distance indicated by F.

Distance F is preferably at least 5 mm or in a range of from 5 to 10 mm, or at least 7 percent of the length of the first outer chipper 102 and the second outer chipper 112. Preferably, distance F is 8 mm, or in a range of from 7 to 9 mm, or at least 11 percent of the length of the first outer chipper 102 and the second outer chipper 112. In such a case, the inboard surface 118 of the second outer chipper 112 is preferably bonded to the outboard surface 110 of the first outer chipper 102 for a distance of 56 mm for instance, which is 78 percent of the length of the first outer chipper and the second outer chipper.

The first outer chipper 102 is formed of or comprises an elastomer or polymer compound known to those skilled in the art. The second outer chipper 112 is formed of or comprises the same elastomer or polymer compound as the first outer chipper 102, or is formed of or comprises a different elastomer or polymer compound.

Both the first outer chipper 102 and the second outer chipper 112 are reinforced with cords, preferably with substantially inextensible cords.

Preferably, the cords are made of steel having a mesh or arrangement of parallel cords with of from 8 to 18 ends per 2.54, and more preferably of from 12 to 16 ends per 2.54 cm.

The wire cord gauge of each chipper 102 and 112 is preferably between 0.6 mm and 1.5 mm. Alternatively, the cords in each chipper 102 and 112 may be made of a polyamide monofilament cord of any cross-sectional shape, such as round, oval or star. The cords of each chipper 102 and 112 preferably are oriented at an angle in a range of from 25 degrees to 85 degrees with respect to the radially oriented cords, preferably steel cords, that reinforce the carcass ply 58. More preferably, the cords of each chipper 102 and 112 are oriented in a range of from 25 to 45 degrees.

The first outer chipper 102 and the second outer chipper 112, when assembled as shown, preferably have generally equal, but oppositely oriented cord angles. Having the cord angles biased oppositely at the locations where the chippers 102 and 112 are joined causes the stresses that would normally tend to initiate a crack at the end 66 the carcass ply turn up 62 to be absorbed first by the radially outward end 116 of the second outer chipper 112. Such absorption causes shear stresses to progress radially inwardly to the area where the first outer chipper 102 is joined to the second outer chipper 112, which in turn causes the shear forces to be absorbed in both the first and second outer chippers above or radially outwardly of the carcass ply turn up 62. This absorption of forces lowers the shear forces absorbed by the carcass ply turn up 62, while also transferring stress to the first outer chipper 102 without unduly loading the carcass ply turn up.

The tire 100 of the present invention provides a structure in which forces due to deflection are absorbed by the second outer chipper 112, as its radially outward end 116 extends radially outwardly past the first outer chipper 102 and the carcass ply turn up 62. Those forces are then absorbed by the second outer chipper 112 and the first outer chipper 102. Such absorption of forces by the second outer chipper 112 and the first outer chipper 102 lowers shear stresses along the carcass ply turn up 62. Lowering or reducing the stresses in the carcass ply turn up 62 enables the tire 100 to resist fatigue cracking in the bead area 52, thereby improving the durability of the bead area.

The pneumatic radial tire of the invention 50, 100 thus includes a layered ply ending or chipper structure 72, 82, 102, 112 that improves the durability of the respective bead areas 52 of the tire and the life of the tire. In each tire of the present invention 50, 100, an advantage includes increased bead durability under heavy loads or high heat conditions, as is seen in vehicles such as buses, tractors and medium commercial truck tires designed for heavy loads. Such tires 50, 100 typically have large rim diameters of 20 inches (508 mm) or greater, and are designed to be retreaded such that the bead portions of the carcass 20 may be exposed to many hundreds of thousands of kilometers. The ability to provide a more durable bead portion or area 52 as accomplished by the tire of the present invention 50, 100 thereby also provides a longer-lasting tire carcass 20.

The present invention also includes a method of forming a tire 50, 100 with improved durability of the bead area 52. The method includes steps in accordance with the description that is presented above and shown in FIGS. 3 and 4.

It is to be understood that the structure of the above-described tire 50, 100 may be altered or rearranged, or components or steps known to those skilled in the art omitted or added, without affecting the overall concept or operation of the invention. For example, the teachings herein are applicable to a broad range of tires and may be useful in tire lines such as passenger tires, radial medium truck tires, aircraft tires, and off-the-road tires or run-flat tires. Moreover, the invention applies to tires formed with any type of belt structure or tread configuration.

## Claims

1. A pneumatic radial tire, the tire (50, 100) comprising:
a pair of opposing bead areas (52), wherein each bead area (52) includes a bead core (54) and a bead apex (64);
at least one carcass reinforcing ply (58), the reinforcing ply (58) including a turn up portion (62) at each bead core (54), each turn up portion including a radially outward end (66); and
a pair of chippers (72, 82, 102, 112) disposed at one of the turn up portions (62) or at each turn up portion (62), the pair of chippers including a first chipper (82, 102) and a second chipper (72, 112);
wherein the first chipper (82, 102) is disposed axially inwardly of the second chipper (72, 112) and includes a radially outward end (86, 106) being disposed radially outwardly of the radially outward end (66) of the turn up portion (62); and
wherein the second chipper (72, 112) includes a radially outward end (76, 116) being disposed radially outwardly of the radially outward end (86, 106) of the first chipper (82, 102).

2. The pneumatic radial tire of claim 1, wherein the radially outward end (76, 116) of the second chipper (72, 112) extends radially outwardly past the radial outward end (86, 106) of the first chipper (82, 102) by a radial distance of at least 5 millimeters.

3. The pneumatic radial tire of claim 1 or 2, wherein a radially inward end (74, 114) of the second chipper (72, 112) is offset in a radially outward direction from a radially inward end (84, 104) of the first chipper (82, 102) by a distance of at least 5 millimeters.

4. The pneumatic radial tire of at least one of the previous claims, wherein the first and second chippers (72, 82, 102, 112) are of the same or of similar radial lengths, or wherein the radial length of the first chipper (82, 102) differs from the radial length of the second chipper (72, 112) only by not more than 20%, preferably less than 10%, of the radial length of the first chipper (82, 102).

5. The pneumatic radial tire of at least one of the previous claims, wherein the first and second chippers (72, 82, 102, 112) are reinforced with cords, preferably with at least substantially inextensible cords.

6. The pneumatic radial tire of claim 5, wherein the cords have generally equal, but oppositely oriented cord angles.

7. The pneumatic radial tire of at least one of the previous claims, wherein the second chipper (72, 112) has a radially inward end (74, 114), and wherein an inboard surface of the second chipper (72, 112) adjacent the second chipper radially inward end (74, 114) is bonded to or adjacent to an outboard surface of the turn up portion (62) near the turn up portion radially outward end (66).

8. The pneumatic radial tire of at least one of the previous claims, wherein the first chipper (82, 102) has a radially inward end (84, 104), and wherein an outboard surface of the first chipper (82, 102) adjacent the first chipper radially inward end (84, 104) is bonded to or adjacent to an inboard surface of the turn up portion (62) near the turn up portion radially outward end (66).

9. The pneumatic radial tire of at least one of the previous claims, wherein the first chipper (82, 102) and the second chipper (72, 112) extend radially outwardly past the radially outward end (66) of the turn up portion (62), and radially outwardly of the turn up portion (62), the inboard surface of the second chipper (72, 112) is bonded to or adjacent to the outboard surface of the first chipper (82, 102).

10. The pneumatic radial tire of at least one of the previous claims, wherein an inboard surface of the first chipper (82, 102) is bonded to or adjacent to an outboard surface of the turn up portion (62).

11. The pneumatic radial tire of at least one of the previous claims, further comprising a chafer (68) disposed about a radially inward surface of the turn up portion (62), and wherein the inboard surface of the first chipper (82, 102) is bonded to or adjacent to an outboard surface of the chafer (68).

12. The pneumatic radial tire of claim 11, wherein the first chipper (82, 102) includes a radially inward end (84, 104) that is disposed radially inwardly of an axially outer end or surface of the chafer (68), and wherein the first chipper (82, 102) extends radially outwardly past the radial outward end (66) of the turn up portion (62).

13. The pneumatic radial tire of at least one of the previous claims, wherein an inboard surface of the second chipper (72, 112) is bonded to or adjacent to an outboard surface of the first chipper (82, 102).

14. The pneumatic radial tire of at least one of the previous claims, wherein the tire is a truck tire that has a nominal bead diameter of at least 508 mm.
